# EUROPEAN PATENT SPECIFICATION

(11) **EP 2 835 758 B1**
(45) Date of publication and mention of the grant of the patent: **02.11.2016**
(21) Application number: 13197604.5
(22) Date of filing: 17.12.2013
(51) Int. Cl.: G06F 21/62

(54) **SYSTEM AND METHOD FOR CONTROLLING ACCESS TO ENCRYPTED FILES**
SYSTEM UND VERFAHREN ZUR KONTROLLE DES ZUGRIFFS AUF VERSCHLÜSSELTE DATEIEN
SYSTÈME ET PROCÉDÉ DE CONTRÔLE D'ACCÈS À DES FICHIERS CRYPTÉS

(30) Priority: 07.08.2013 RU 2013136975; 04.12.2013 US 201314096150
(43) Date of publication of application: 11.02.2015
(73) Proprietor: Kaspersky Lab, ZAO, Moscow 125212 (RU)
(72) Inventor: Makarov, Alexander N., 125212 Moscow (RU); Kirikova, Evgeniya P., 125212 Moscow (RU); Voitov, Nikita M., 125212 Moscow (RU); Shiyafetdinov, Damir R., 125212 Moscow (RU); Ovcharik, Vladislav I., 125212 Moscow (RU)
(74) Representative: Sloboshanin, Sergej

(56) References cited:
- US-A1- 2012 036 370
- Nora Cuppens-Boulahia ET AL: "Negotiation of Prohibition: An Approach Based on Policy Rewriting", Advances in Digital Forensics IV, vol. 278, 1 January 2008 (2008-01-01), pages 173-187, XP055180452, Boston, MA ISSN: 1571-5736, DOI: 10.1007/978-0-387-09699-5_12 ISBN: 978-0-38-784927-0

## Description

### Technical Field

The present disclosure generally relates to the field of computer and network security, and more specifically to systems and methods for controlling access to encrypted files.

### Background

In modern society, the demand for information security of corporate networks and its users is constantly growing. Data theft and leaks from corporate networks have increased in frequency, and the financial losses cause substantial harm to businesses. Due to vulnerabilities in software and human factors, data transmitted on a corporate network can be intercepted by malware and hackers. Therefore, the encrypting of data on workstations, notebook computers, mobile devices and removable storage media used in corporate networks becomes necessary.

The classic system for encryption of files and directory contents on computers operates in accordance with file access policies that determine which groups of files must be encrypted and which files may not. In such a system, the most vulnerable and critical files (such as files containing confidential information whose loss is undesirable to its owner) are typically encrypted on disk and if an application tries to gain access to such files the system either provides them to the authorized application in decrypted form or blocks access to them. However, when an authorized application opens an encrypted file, it can transfer the file outside the corporate network, which may cause data leaks. Therefore, there is a need for an improved technique for controlling access to encrypted files on corporate networks.

In US 2012/036370 A1, a method and system for protecting documents using declarative policies and encryption in conjunction with a policy enforcer and an encryption service are disclosed. Specifically, a policy enforcer and an encryption service cooperate to offer two views of an encrypted document to an application which attempts to access it depending on trust: If a first application is trusted by the policy enforcer that it will continue to protect the unencrypted content of an encrypted document, the encryption service will decrypt the encrypted document to produce the unencrypted content and provide it to the first application program. If a second application program is not trusted by the policy enforcer to protect unencrypted content, the encryption service will serve the second application program with encrypted content (e.g., original content of the encrypted document that has not been decrypted).

### Summary

The invention is defined by the appended claims.

### Brief Description of the Drawings

The accompanying drawings, which are incorporated into and constitute a part of this specification, illustrate one or more example embodiments of the invention and, together with the detailed description, serve to explain their principles and implementations.
In the drawings:
**Fig. 1** illustrates a block diagram of an example system for controlling access to encrypted files according to aspects of the present invention.
**Fig. 2** illustrates a flow diagram of an example method of controlling access to encrypted files according to aspects of the present invention.
**Fig. 3** illustrates a block diagram of an example general-purpose computer system on which the system and method for controlling access to encrypted files may be implemented.

### Detailed Description of Example Embodiments

Example embodiments of the present invention are described herein in the event context of systems, methods and computer program products for controlling access to encrypted files. Those of ordinary skill in the art will realize that the following description is illustrative only and is not intended to be in any way limiting. Other embodiments will readily suggest themselves to those skilled in the art having the benefit of this disclosure. Reference will now be made in detail to implementations of the example embodiments as illustrated in the accompanying drawings. The same reference indicators will be used to the extent possible throughout the drawings and the following description to refer to the same or like items.

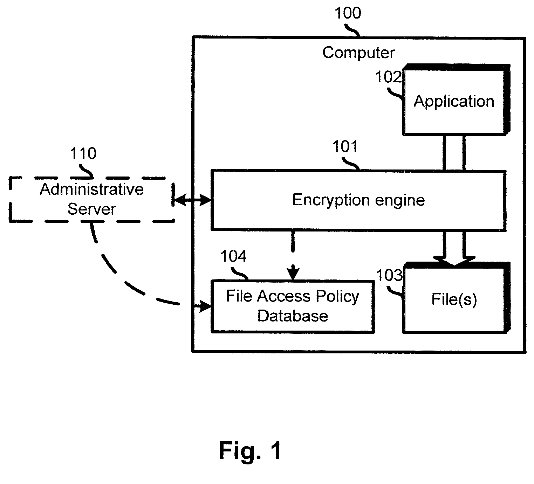

**Fig. 1** illustrates an example system for controlling access to encrypted files according to aspects of the present invention. In one example aspect, the system includes a number of personal computers 100. Each computer 100 may have a plurality of software applications 102 installed thereon. The applications 102 are configured to access various files 103. Accessing a file includes, but not limited to, opening a file, reading or writing into the files, copying a file, and performing other operations on the file 103. The files 103 may be stored on one or more hard disk drives of the computer 100 or on a removable storage media connected to the computer 100. Certain files 103 may be encrypted using, for example, a symmetrical or asymmetrical encryption, or other type of encryption technology. The computer 100 also includes a file access policy database 104 that contains access policies for encrypted and unencrypted files 103 for different applications 102. The database 104 may be any known database, such as a relational or hierarchical database, and it can reside on an external storage device, such as a hard disk, a solid state drive, etc., on a network storage, or in the random access memory of computer 100.

The computer 100 also includes an encryption engine 101, which is connected to the database 104. The engine 101 may be configured to intercept requests of applications 102 to access files 103, and control access of the application 102 to files 103 depending on the policies for granting of file access rights. The encryption engine 101 may intercept requests of applications 102 to access (e.g., open, read, write, etc.) files 103 using any of the following techniques: by means of a driver controlling the opening of files (such as a file system filter driver); by means of intercepting calls of operating system APIs (application programming interfaces); by using the APIs provided by the applications 102; or using other known methods.

The system may additionally include an administrative server 110, connected to the encryption engine 101 and the file access policy database 104. The administrative server 110 is used to define or change the file access policies. The administrative server 110 may send the file access policies to the encryption engine 101, which in turn keeps them in the file access policy database 104. The administrative server 110 may also store the file access policies in the file access policy database 104 without the involvement of the encryption engine 101 (for example, by the network, using a supplemental software program, or with publication of the policies on a policy register that is universally accessible over the local network, such as the Active Directory).

File access policies may contain rules that specify file access rights to files 103 for applications 102. For example, the rules may specify whether to provide a file in encrypted form (ciphertext), to provide a file in decrypted form (plaintext), or block access to the file to the application 102. The file access policies may additionally contain the following rules: delete the file after a certain number of blocked attempts to access the file (e.g., after ten attempts); and send information about the request to grant access to the file to the administrative server 110. A password may be asked of the user before the file is provided to the application in decrypted form. The file access policies may specify user account access privileges. For example, for a user account with administrator rights, the file access policies may contain a rule that a certain application 102, e.g., Skype^{®} application, should be provided with files in decrypted form. For other user accounts, the file access policies may contain a rule that the same application 102 should be provided with files in encrypted form. In this example, only users with administrator rights can send files on the network in decrypted form. At the same time, other users can send files only in encrypted form, thus reducing the risk of data leaks.

The file access policies may check whether computer 100 is connected to a network. In this case, when the computer 100 is not connected to the network, certain files (e.g., Skype files) may be provided to application 103 running on computer 100 in plaintext. When a connection to the network is present, the same files may be provided to the computer 100 in ciphertext, thereby preventing potential data leaks.

For applications 103 combining file management with file viewing (such as the FAR Manager application), the file access policies may also depend on a user account. Thus, for example, encrypted files may be provided to the computer administrator for viewing in decrypted form, while for ordinary users they are provided in the form of ciphertext. However, other functions of such an application can be the same for all users, so that both the computer administrator and other users can have the ability to manage computer files 103.

The file access policies may depend on additional parameters, such as, for example: the type, extension, size, or category of file (such as for work or personal use), the presence of certain keywords or byte sequences in the file, and other parameters. In this example, even an initially unencrypted file may be provided to an application in encrypted form if the file contains a certain set of the aforementioned parameters. For example, if the file contains company's financial records, it may be encrypted in the computer's random access memory, and provided to the application in ciphertext. The parameters can be kept in the file attributes or in a separate file on the computer 100. The definition of the parameters may be done by the encryption engine 101 either when creating the file or when an application requests access to the file.

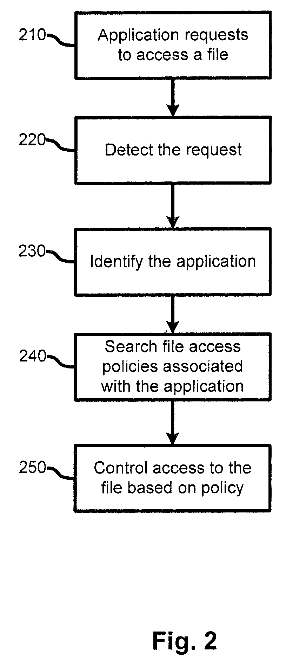

**Fig. 2** illustrates an example method of controlling access to encrypted files according to aspects of the present invention. In step 210, the application 102 makes a request to access a file 103. In step 220, the encryption engine 101 detects/intercepts the request and, in step 230, determines which application is requesting access to the file. The application may be identified from the name of its executable file (such as "Skype.exe"). Any other known methods can also be used to identify the application, such as: its hash sum; its digital signature; metadata of the executable file (such as its size, date of creation); and information contained in the resources of the executable file (such as the author's name, the file version number).

Next, in step 240, the encryption engine 101 may use the file access policy database 104 to determine the application 102 and the file access policy corresponding to this application. In the next step 250, the encryption engine 101 provides the application 102 with access rights to the requested file in accordance with the file access policy associated with the application 102. As noted above, the file access policies may contain rules whereby the application 102 can be provided with the file in encrypted form (ciphertext), the file in decrypted form (plaintext), or the access to the file will be blocked for the application.

The encryption engine 101 may additionally monitor third-party applications (e.g., child processes or threads) started by the original application 102. In this example, the file access policies may be inherited by the third-party applications. For example, when downloading a document in PDF format in Internet Explorer^{®}, the browser will open an application to view PDF documents, such as Adobe Reader^{®}. Thus, if the file access policy database 104 contains a rule that certain files are provided to Internet Explorer^{®} in decrypted form, this rule may also be applied to the Adobe Reader^{®} application.

Applications can be divided into categories, as described in greater detail in a commonly owned US Patent No. 7,640,589. Such categories may include, for example, trusted applications, untrusted applications, and unknown applications. The file access policies may be extended to categories of applications, rather than individual applications.

When several file access policies apply to the same application, the file access policy may specify different priorities to the different applications, so that the encryption engine 101 can use the policy with the highest priority. Table 1 shows example application priorities, and Table 2 shows file access rules associated with different priories.

**Table 1**

| Nº | Application | Priority |
|---|---|---|
| 1 | Adobe Reader | 1 |
| 2 | Internet Explorer (IE) | 3 |
| 3 | Skype | 2 |
| ... | ... | ... |

**Table 2**

| Nº | Priority | Rule |
|---|---|---|
| 1 | 1 | Provide plaintext |
| 2 | 2 | Provide ciphertext |
| 3 | 3 | Prohibit access to the file |

According to the first rule of Table 1, the Adobe Reader^{®} application has priority 1, and according to the corresponding rule from Table 2 this application will be provided with a plaintext file. At the same time, if the file was initially encrypted, the encryption engine 101 will decrypt it before providing it to the Adobe Reader^{®} application. According to the second rule of Table 1, the Internet Explorer^{®} application has priority 3, which in turn corresponds to rule 3 of Table 2. According to the identified rule, access of the application to the file will be prohibited. For example, Adobe Reader^{®} application was started by the Internet Explorer. Then, in order to determine which rule from Table 1 should be used to provide files to the Adobe Reader^{®}, the priority of the rules will be used. Thus, Table 3 shows example rules for selecting the file access policy among several permissible policies having different priorities.

**Table 3**

| Nº | Condition | Priority selection rule |
|---|---|---|
| 1 | From 8:00 a.m. to 4:30 p.m. | The inherited policy has priority 1 |
| 2 | Rest of the time | The inherited policy has the priority of the application from which it is inherited |

In the above-described example, a file in PDF format opens the application Internet Explorer^{®}, which in turn calls up the Adobe Reader. As a result, the Adobe Reader opens the file. In this case, Adobe Reader may inherit the policy from Internet Explorer^{®}, according to which access of the application to the file will be prohibited. At the same time, a policy has already been determined for the Adobe Reader in the file access policy database 104 according to which the encryption engine 101 will provide plaintext to the application. For this reason, it becomes necessary to select the policy with highest priority. The priority selection rule may depend on various conditions (such as the time of day; the use of additional authentication means, such as a token; the rights of the user account; the security policies, and so on). The administrator of the administrative server 110 or the administrator of the computer 100 can assign, alter or remove the priority selection rule, as well as the file access policy. According to Table 3, in the above-considered example, when condition 1 is fulfilled the inherited policy will have priority 1, which coincides with the priority of the rule for Adobe Reader^{®} that is contained in the file access policy database 104. As a result, the Adobe Reader^{®} will be provided with plaintext, in keeping with the inherited policy 1 from Table 2. But if condition 2 is fulfilled, the inherited policy will have the priority of Internet Explorer^{®}, equal to 3. Therefore, the access to the file will be prohibited to the Adobe Reader.

The described system and method of providing applications with access rights to computer files can be used to solve various problems relating to protection of critical data. For example, for applications performing a backup copying of data, a file access policy can be specified according to which files will be provided to applications in the form of ciphertext. As a result, critical files may be saved in a backup storage in encrypted form, thus increasing the level of security. Similar file access policies may also be specified for applications performing a synchronization of data on the local area network or via the Internet (so-called cloud services). Another example for the use of the present system is the secure sending of messages by means of email clients and IM (instant messaging) applications. If a policy is specified for such an application according to which files will be provided to the application in encrypted form, this may help improve the security of the transmitted data even when an email client or the user account of the IM client user have been broken into by a hacker. In such a situation, the hacker will not be able to decrypt the files without knowing decryption keys. Yet another example is the policies that are imposed on portable devices. Thus, for example, a work notebook may contain work files in encrypted form and home files (such as photo, video and audio files) in decrypted form. Thus, when the notebook is within the company network, access to the work files can be transparent (that is, from the standpoint of the user, working with the encrypted files will be the same as working with the non-encrypted files). But when the user is working on the notebook at home, access to the work files may be prohibited to the majority of applications, and files may be provided only to some applications in the form of ciphertext.

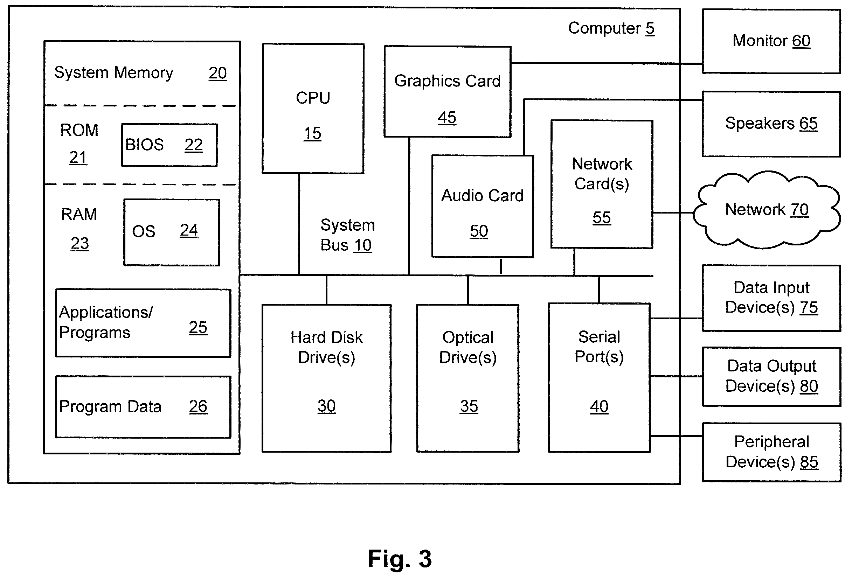

**Fig. 3** depicts one example aspect of a general-purpose computer system 5 that can be used to implement the disclosed systems and methods for controlling access to encrypted files. The computer system 5 may include, but not limited to, a personal computer, a notebook, tablet computer, a smart phone, a network server, a router, or other type of processing device. As shown, computer system 5 may include one or more hardware processors 15, memory 20, one or more hard disk drive(s) 30, optical drive(s) 35, serial port(s) 40, graphics card 45, audio card 50 and network card(s) 55 connected by system bus 10. System bus 10 may be any of several types of bus structures including a memory bus or memory controller, a peripheral bus and a local bus using any of a variety of known bus architectures. Processor 15 may include one or more Intel^{®} Core 2 Quad 2.33 GHz processors or other type of microprocessor.

System memory 20 may include a read-only memory (ROM) 21 and random access memory (RAM) 23. Memory 20 may be implemented as in DRAM (dynamic RAM), EPROM, EEPROM, Flash or other type of memory architecture. ROM 21 stores a basic input/output system 22 (BIOS), containing the basic routines that help to transfer information between the components of computer system 5, such as during start-up. RAM 23 stores operating system 24 (OS), such as Windows^{®} XP Professional or other type of operating system, that is responsible for management and coordination of processes and allocation and sharing of hardware resources in computer system 5. Memory 20 also stores applications and programs 25. Memory 20 also stores various runtime data 26 used by programs 25. Computer system 5 may further include hard disk drive(s) 30, such as SATA HDD, and optical disk drive(s) 35 for reading from or writing to a removable optical disk, such as a CD-ROM, DVD-ROM or other optical media. Drives 30 and 35 and their associated computer-readable media provide non-volatile storage of computer readable instructions, data structures, applications and program modules/subroutines that implement algorithms and methods disclosed herein. Although the exemplary computer system 5 employs magnetic and optical disks, it should be appreciated by those skilled in the art that other types of computer readable media that can store data accessible by a computer system 5, such as magnetic cassettes, flash memory cards, digital video disks, RAMs, ROMs, EPROMs and other types of memory may also be used in alternative aspects of the computer system 5.

Computer system 5 further includes a plurality of serial ports 40, such as Universal Serial Bus (USB), for connecting data input device(s) 75, such as keyboard, mouse, touch pad and other. Serial ports 40 may be also be used to connect data output device(s) 80, such as printer, scanner and other, as well as other peripheral device(s) 85, such as external data storage devices and the like. System 5 may also include graphics card 45, such as nVidia^{®} GeForce^{®} GT 240M or other video card, for interfacing with a monitor 60 or other video reproduction device. System 5 may also include an audio card 50 for reproducing sound via internal or external speakers 65. In addition, system 5 may include network card(s) 55, such as Ethernet, WiFi, GSM, Bluetooth or other wired, wireless, or cellular network interface for connecting computer system 5 to network 70, such as the Internet.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods are described in the present disclosure in terms of an engine. The term "engine" as used herein means a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor of a general purpose computer (such as the one described in greater detail in Fig. 3 above). Accordingly, the engine can be realized in a variety of suitable configurations, and should not be limited to any particular implementation exemplified herein.

In the interest of clarity, not all of the routine features of the aspects are disclosed herein. It will be appreciated that in the development of any actual implementation of the invention, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

## Claims

1. A method for controlling access to encrypted files (103), the method comprising:
storing, in a database (104), priority information for a plurality of applications and a plurality of file access policies that are associated with priority information for the plurality of applications, respectively, where the plurality of file access policies each specify a different rule for accessing an encrypted file, including: (i) providing access to the encrypted file, (ii) decrypting the encrypted file and providing access to a decrypted file, and (iii) blocking access to the encrypted file;
detecting (220), by a hardware processor (101), a request (210) from a first application (102) to access the encrypted file (103);
identifying (230), by the hardware processor (101), the first application (102) that requested (210) access to the encrypted file (103) including identifying, in the database (104), a priority associated with the first application, and the file access policy associated with the priority of the first application;
identifying (240), by the hardware processor (101), a second application started by the first application for accessing the requested file including identifying, in the database (104), a priority associated with the second application, and the file access policy (104) associated with the priority of the second application (102);
determining, by the hardware processor (101), which of a plurality of conditions has been satisfied, each condition being associated with a priority selection rule for determining the priority of the file access policy to be applied to the second application;selecting, by the hardware processor (101), the file access policy associated with the priority determined by the priority selection rule associated with the satisfied condition; and
controlling (250), by the hardware processor (101), access to the encrypted file (103) by the second application based on the rule specified in the selected file access policy.

2. The method of claim 1, wherein the selected file access policy (104) further specifies: whether to remove the encrypted file (103) after a certain number of blocked attempts (210) to access the encrypted file (103), and whether to send information about the blocked attempts (210) to access the encrypted file (103) to a security service.

3. The method of claim 1, wherein the selected file access policy (104) further specifies whether to check for the presence of a network (70) connection and to determine the appropriate file access method based on a presence or an absence of an existing network (70) connection.

4. The method of claim 1, wherein the selected file access policy (104) further specifies whether to allow access to an encrypted or decrypted file based on a type of a user account of a user of the second application (102).

5. The method of claim 1, further comprising: requesting a user of the second application (102) to provide a password for accessing the decrypted file (103).

6. The method of claim 1, wherein identifying (230) at least one of the first and second application (102) further includes identifying one or more of: a name of an executable file of the application (102), a hash sum of the executable file, a digital signature of the executable file, metadata of the executable file, and information contained in resources of the executable file.

7. The method of claim 1, wherein the plurality of conditions includes one of a time criteria, a token, rights of a user account, and security policies .

8. A system (5, 100) for controlling access to encrypted files (103), the system (5, 100) comprising:
a database (104) configured to store priority information for a plurality of applications and a plurality of file access policies that are associated with priority information for the plurality of applications, respectively, where the plurality of file access policies each specify a different rule for accessing an encrypted file, including: (i) providing access to the encrypted file, (ii) decrypting the encrypted file and providing access to a decrypted file, and (iii) blocking access to the encrypted file; and
a hardware processor (101) configured to:
detect (220) a request (210) from a first application (102) of the plurality of applications to access the encrypted file (103);
identify (230) the first application (102) that requested (210) access to the encrypted file (103) including identifying, in the database (104), a priority associated with the first application, and the file access policy associated with the priority of the first application;
identify (240) a second application started by the first application for accessing the requested file including identifying, in the database (104), a priority associated with the second application, and the file access policy (104) associated with the priority of the second application (102);
determining which of a plurality of conditions has been satisfied, each condition being associated with a priority selection rule for determining the priority of the file access policy to be applied to the second application;
selecting the file access policy associated with the priority determined by the priority selection rule associated with the satisfied condition; and
control (250) access to the encrypted file (103) by the second application based on the rule specified in the selected file access policy.

9. The system (5, 100) of claim 8, wherein the selected file access policy (104) further specifies: whether to remove the encrypted file (103) after a certain number of blocked attempts (210) to access the encrypted file (103), and whether to send information about the blocked attempts (210) to access the encrypted file (103) to a security service.

10. The system (5, 100) of claim 8, wherein the selected file access policy (104) further specifies whether to check for the presence of a network (70) connection and to determine an appropriate file access method based on a presence or an absence of an existing network (70) connection.

11. The system (5, 100) of claim 8, wherein the selected file access policy (104) further specifies whether to allow access to an encrypted or decrypted file based on a type of user account of a user of the second application (102) .

12. The system of claim 8, wherein the plurality of conditions includes one of a time criteria, a token, rights of a user account, and security policies .

## Patentansprüche

1. Verfahren zum Steuern des Zugriffs auf verschlüsselte Dateien (103), das Verfahren umfassend:
Speichern von Prioritätsinformationen in einer Datenbank (104) für eine Vielzahl von Anwendungen beziehungsweise eine Vielzahl von Dateizugriffsrichtlinien, welche Prioritätsinformationen für die Vielzahl von Anwendungen zugeordnet sind, wobei jede der Vielzahl von Dateizugriffsrichtlinien eine unterschiedliche Regel für das Zugreifen auf eine verschlüsselte Datei spezifiziert, umfassend: (i) Bereitstellen des Zugriffs auf die verschlüsselte Datei, (ii) Entschlüsseln der verschlüsselten Datei und Bereitstellen des Zugriffs auf eine entschlüsselte Datei und (iii) Blockieren des Zugriffs auf die verschlüsselte Datei;
Erfassen (220) einer Anforderung (210) von einer ersten Anwendung (102) zum Zugreifen auf die verschlüsselte Datei (103) durch einen Hardwareprozessor (101);
Identifizieren (230) der ersten Anwendung (102), welche Zugriff auf die verschlüsselte Datei (103) anforderte (210), durch den Hardwareprozessor (101), einschließlich des Identifizierens einer der ersten Anwendung zugeordneten Priorität in der Datenbank (104) und der der Priorität der ersten Anwendung zugeordneten Dateizugriffsrichtlinie;
Identifizieren (240) einer zweiten Anwendung, welche durch die erste Anwendung zum Zugreifen auf die angeforderte Datei gestartet wurde, durch den Hardwareprozessor (101), einschließlich des Identifizierens einer der zweiten Anwendung zugeordneten Priorität in der Datenbank (104) und der der Priorität der zweiten Anwendung (102) zugeordneten Dateizugriffsrichtlinie (104);
Bestimmen durch den Hardwareprozessor (101), welche einer Vielzahl von Bedingungen erfüllt wurde, wobei jede Bedingung einer Puoritätsauswahlregel zum Bestimmen der Priorität der Dateizuguffsrichtlinie, welche auf die zweite Anwendung anzuwenden ist, zugeordnet ist;
Auswählen durch den Hardwareprozessor (101) der Dateizugriffsrichtlinie, welche der Priorität zugeordnet ist, die durch die der erfüllten Bedingung zugeordneten Prioritätsauswahlregel bestimmt wird;
und
Steuern (250) durch den Hardwareprozessor (101) des Zugriffes auf die verschlüsselte Datei (103) durch die zweite Anwendung basierend auf der in der ausgewählten Dateizugriffsrichtlinie spezifizierten Regel.

2. Verfahren nach Anspruch 1, wobei die ausgewählte Dateizugriffsrichtlinie (104) ferner spezifiziert: ob die verschlüsselte Datei (103) nach einer bestimmten Anzahl blockierter Versuche (210) zum Zugreifen auf die verschlüsselte Datei (103) zu entfernen ist, und ob Informationen über die blockierten Versuche (210) zum Zugreifen auf die verschlüsselte Datei (103) an einen Sicherheitsdienst zu senden sind.

3. Verfahren nach Anspruch 1, wobei die ausgewählte Dateizugriffsrichtlinie (104) ferner spezifiziert, ob das Vorhandensein einer Netzwerk(70)-Verbindung zu überprüfen ist und das angemessene Dateizugriffsverfahren basierend auf einem Vorhandensein oder einem Nichtvorhandensein einer bestehenden Netzwerk(70)-Verbindung zu bestimmen ist.

4. Verfahren nach Anspruch 1, wobei die ausgewählte Dateizugriffsrichtlinie (104) ferner spezifiziert, ob der Zugriff auf eine verschlüsselte oder entschlüsselte Datei basierend auf einem Typ eines Benutzerkontos eines Benutzers der zweiten Anwendung (102) zuzulassen ist.

5. Verfahren nach Anspruch 1, ferner umfassend: Auffordern eines Benutzers der zweiten Anwendung (102), ein Passwort für das Zugreifen auf die entschlüsselte Datei (103) bereitzustellen.

6. Verfahren nach Anspruch 1, wobei das Identifizieren (230) wenigstens einer der ersten und der zweiten Anwendung (102) ferner das Identifizieren von einem oder mehreren aus: einem Namen einer ausführbaren Datei der Anwendung (102), einer Prüfsumme der ausführbaren Datei, einer digitalen Signatur der ausführbaren Datei, Metadaten der ausführbaren Datei und Informationen, welche in Ressourcen der ausführbaren Datei enthalten sind, umfasst.

7. Verfahren nach Anspruch 1, wobei die Vielzahl von Bedingungen eine aus Zeitkriterien, einem Token, Rechten eines Benutzerkontos und Sicherheitsrichtlinien umfassen.

8. System (5, 100) zum Steuern des Zugriffs auf verschlüsselte Dateien (103), das System (5, 100) umfassend:
eine Datenbank (104), welche zum Speichern von Prioritätsinformationen für eine Vielzahl von Anwendungen beziehungsweise eine Vielzahl von Dateizugriffsrichtlinien konfiguriert ist, welche Prioritätsinformationen für die Vielzahl von Anwendungen zugeordnet sind, wobei jede der Vielzahl von Dateizugriffsrichtlinien eine unterschiedliche Regel für das Zugreifen auf eine verschlüsselte Datei spezifiziert, umfassend: (i) Bereitstellen des Zugriffs auf die verschlüsselte Datei, (ii) Entschlüsseln der verschlüsselten Datei und Bereitstellen des Zugriffs auf eine entschlüsselte Datei und (iii) Blockieren des Zugriffs auf die verschlüsselte Datei; und
einen Hardwareprozessor (101), der dazu konfiguriert ist:
eine Anforderung (210) von einer ersten Anwendung (102) der Vielzahl von Anwendungen zum Zugreifen auf die verschlüsselte Datei (103) zu erfassen (220);
die erste Anwendung (102), welche Zugriff auf die verschlüsselte Datei (103) anforderte (210), zu identifizieren (230), einschließlich des Identifizierens einer der ersten Anwendung zugeordneten Priorität in der Datenbank (104) und der der Priorität der ersten Anwendung zugeordneten Dateizuguffsrichtlinie;
eine zweite Anwendung, welche durch die erste Anwendung zum Zugreifen auf die angeforderte Datei gestartet wurde, zu identifizieren (240), einschließlich des Identifizierens einer der zweiten Anwendung zugeordneten Priorität in der Datenbank (104) und der der Priorität der zweiten Anwendung (102) zugeordneten Dateizugriffsrichtlinie (104);
zu bestimmen, welche einer Vielzahl von Bedingungen erfüllt wurde, wobei jede Bedingung einer Prioritätsauswahlregel zum Bestimmen der Priorität der Dateizugriffsrichtlinie, welche auf die zweite Anwendung anzuwenden ist, zugeordnet ist;
die Dateizugriffsrichtlinie auszuwählen, welche der Priorität zugeordnet ist, die durch die der erfüllten Bedingung zugeordnete Prioutätsauswahlregel bestimmt wird;
und
den Zugriff auf die verschlüsselte Datei (103) durch die zweite Anwendung basierend auf der in der ausgewählten Dateizugriffsuchtlinie spezifizierten Regel zu steuern.

9. System (5, 100) nach Anspruch 8, wobei die ausgewählte Dateizugriffsuchtlinie (104) ferner spezifiziert: ob die verschlüsselte Datei (103) nach einer bestimmten Anzahl blockierter Versuche (210) zum Zugreifen auf die verschlüsselte Datei (103) zu entfernen ist, und ob Informationen über die blockierten Versuche (210) zum Zugreifen auf die verschlüsselte Datei (103) an einen Sicherheitsdienst zu senden sind.

10. System (5, 100) nach Anspruch 8, wobei die ausgewählte Dateizugriffsrichtlinie (104) ferner spezifiziert, ob das Vorhandensein einer Netzwerk(70)-Verbindung zu überprüfen ist und ein angemessenes Dateizugriffsverfahren basierend auf einem Vorhandensein oder einem Nichtvorhandensein einer bestehenden Netzwerk(70)-Verbindung zu bestimmen ist.

11. System (5, 100) nach Anspruch 8, wobei die ausgewählte Dateizugriffsrichtlinie (104) ferner spezifiziert, ob der Zugriff auf eine verschlüsselte oder entschlüsselte Datei basierend auf einem Typ eines Benutzerkontos eines Benutzers der zweiten Anwendung (102) zuzulassen ist.

12. System nach Anspruch 8, wobei die Vielzahl von Bedingungen eines aus Zeitkriterien, einem Token, Rechten eines Benutzerkontos und Sicherheitsrichtlinien umfassen.

## Revendications

1. Un procédé de contrôle d'accès à des fichiers chiffrés (103), le procédé comprenant :
la conservation en mémoire, dans une base de données (104), d'informations de priorité pour une pluralité d'applications et une pluralité de politiques d'accès aux fichiers qui sont associées à des informations de priorité pour la pluralité d'applications, respectivement, dans lequel la pluralité de politiques d'accès aux fichiers spécifient chacune une règle d'accès différente à un fichier chiffré, comprenant : (i) la fourniture d'un accès au fichier chiffré, (ii) le déchiffrement du fichier chiffré et la fourniture d'un accès à un fichier déchiffré, et (iii) le blocage de l'accès au fichier chiffré;
la détection (220), par un processeur matériel (101), d'une demande (210) provenant d'une première application (102) d'accès au fichier chiffré (103);
l'identification (230), par le processeur matériel (101), de la première application (102) qui a demandé (210) un accès au fichier chiffré (103) comprenant l'identification, dans la base de données (104), d'une priorité associée à la première application, et de la politique d'accès aux fichiers associée à la priorité de la première application;
l'identification (240), par le processeur matériel (101), d'une deuxième application lancée par la première application d'accès au fichier demandé comprenant l'identification, dans la base de données (104), d'une priorité associée à la deuxième application et de la politique d'accès aux fichiers (104) associée à la priorité de la deuxième application (102);
la détermination, par le processeur matériel (101), de la condition d'une pluralité de conditions qui a été satisfaite, chaque condition étant associée à une règle de sélection de priorité destinée à la détermination de la priorité de la politique d'accès aux fichiers à appliquer à la deuxième application; la sélection, par le processeur matériel (101), de la politique d'accès aux fichiers associée à la priorité déterminée par la règle de sélection de priorité associée à la condition satisfaite;
le contrôle (250), par le processeur matériel (101), d'un accès au fichier chiffré (103) par la deuxième application en fonction de la règle spécifiée dans la politique d'accès aux fichiers sélectionnée.

2. Le procédé selon la revendication 1, dans lequel la politique d'accès aux fichiers sélectionnée (104) spécifie en outre: s'il convient de retirer le fichier chiffré (103) après un nombre donné de tentatives bloquées (210) d'accès au fichier chiffré (103) et s'il convient d'envoyer des informations relatives aux tentatives bloquées (210) d'accès au fichier chiffré (103) à un service de sécurité.

3. Le procédé selon la revendication 1, dans lequel la politique d'accès aux fichiers sélectionnée (104) spécifie en outre s'il convient de vérifier la présence d'une connexion à un réseau (70) et de déterminer le procédé d'accès aux fichiers approprié en fonction d'une présence ou d'une absence d'une connexion à un réseau existant (70).

4. Le procédé selon la revendication 1, dans lequel la politique d'accès aux fichiers sélectionnée (104) spécifie en outre s'il convient d'autoriser un accès à un fichier chiffré ou déchiffré en fonction d'un type d'un compte d'utilisateur d'un utilisateur de la deuxième application (102).

5. Le procédé selon la revendication 1, comprenant en outre : l'invitation d'un utilisateur de la deuxième application (102) à fournir un mot de passe d'accès au fichier déchiffré (103).

6. Le procédé selon la revendication 1, dans lequel l'identification (230) d'au moins une application parmi les première et deuxième applications (102) comprend en outre l'identification d'un ou de plusieurs éléments parmi : un nom d'un fichier exécutable de l'application (102), une somme de hachage du fichier exécutable, une signature numérique du fichier exécutable, des métadonnées du fichier exécutable et des informations contenues dans des ressources du fichier exécutable.

7. Le procédé selon la revendication 1, dans lequel la pluralité de conditions comprend une condition parmi un critère temporel, un jeton, des droits d'un compte d'utilisateur et des politiques de sécurité.

8. Un système (5, 100) de contrôle d'accès à des fichiers chiffrés (103), le système (5, 100) comprenant :
une base de données (104) configurée de façon à conserver en mémoire des informations de priorité pour une pluralité d'applications et une pluralité de politiques d'accès aux fichiers qui sont associées à des informations de priorité pour la pluralité d'applications, respectivement, dans lequel la pluralité de politiques d'accès aux fichiers spécifient chacune une règle d'accès différente à un fichier chiffré, comprenant : (i) la fourniture d'un accès au fichier chiffré, (ii) le déchiffrement du fichier chiffré et la fourniture d'un accès à un fichier déchiffré, et (iii) le blocage de l'accès au fichier chiffré, et
un processeur matériel (101) configuré de façon à :
détecter (220) une demande (210) provenant d'une première application (102) de la pluralité d'applications d'accès au fichier chiffré (103);
identifier (230) la première application (102) qui a demandé (210) un accès au fichier chiffré (103) comprenant l'identification, dans la base de données (104), d'une priorité associée à la première application et de la politique d'accès aux fichiers associée à la priorité de la première application;
identifier (240) une deuxième application lancée par la première application d'accès au fichier demandé comprenant l'identification, dans la base de données (104), d'une priorité associée à la deuxième application et de la politique d'accès aux fichiers (104) associée à la priorité de la deuxième application (102);
la détermination de la condition d'une pluralité de conditions qui a été satisfaite, chaque condition étant associée à une règle de sélection de priorité pour la détermination de la priorité de la politique d'accès aux fichiers à appliquer à la deuxième application;
la sélection de la politique d'accès aux fichiers associée à la priorité déterminée par la règle de sélection de priorité associée à la condition satisfaite;
le contrôle (250) d'un accès au fichier chiffré (103) par la deuxième application en fonction de la règle spécifiée dans la politique d'accès aux fichiers sélectionnée.

9. Le système (5, 100) selon la revendication 8, dans lequel la politique d'accès aux fichiers sélectionnée (104) spécifie en outre : s'il convient de retirer le fichier chiffré (103) après un nombre donné de tentatives bloquées (210) d'accès au fichier chiffré (103) et s'il convient d'envoyer des informations relatives aux tentatives bloquées (210) d'accès au fichier chiffré (103) à un service de sécurité.

10. Le système (5, 100) selon la revendication 8, dans lequel la politique d'accès aux fichiers sélectionnée (104) spécifie en outre s'il convient de vérifier la présence d'une connexion à un réseau (70) et de déterminer un procédé d'accès aux fichiers approprié en fonction d'une présence ou d'une absence d'une connexion à un réseau existant (70).

11. Le système (5, 100) selon la revendication 8, dans lequel la politique d'accès aux fichiers sélectionnée (104) spécifie en outre s'il convient d'autoriser un accès à un fichier chiffré ou déchiffré en fonction d'un type de compte d'utilisateur d'un utilisateur de la deuxième application (102).

12. Le système selon la revendication 8, dans lequel la pluralité de conditions comprend une condition parmi un critère temporel, un jeton, des droits d'un compte d'utilisateur et des politiques de sécurité.
